# EUROPEAN PATENT APPLICATION

(11) **EP 3 517 935 A1**
(43) Date of publication of application: **31.07.2019**
(21) Application number: 17852220.7
(22) Date of filing: 17.07.2017
(51) Int. Cl.: G01N 21/3586

(54) **SYSTEM FOR DETECTING, CONTROLLING AND MONITORING MOISTURE CONTENT**

(30) Priority: 26.09.2016 CN 201610851926
(71) Applicant: China Communication Technology Co., Ltd., Shenzhen, Guangdong 518102 (CN); Shenzhen Terahertz System Equipment Co., Ltd., Shenzhen, Guangdong 518000 (CN)
(72) Inventor: LI, Chen, Shenzhen, Guangdong 518102 (CN); DING, Qing, Shenzhen, Guangdong 518102 (CN)
(74) Representative: Winter, Brandl, Fürniss, Hübner, Röss, Kaiser, Polte - Partnerschaft mbB
(86) International application number: PCT/CN2017/093237
(87) International publication number: WO 2018/054150

(57) **Abstract**

Disclosed is a system for detecting, controlling and monitoring moisture content. The moisture content detection system comprises a moisture meter system component (10), a lens component (11) and a signal analysis component (12); the moisture meter system component (10) comprises a light source component (101), a terahertz radiator (102), and a first and a second terahertz detectors (103, 104); the signal analysis component (12) comprises a bias signal generator (121) and a signal processing device (122); the light source component (101) generates a laser beat frequency beam, which is splitted and sent to the terahertz radiator (102), and the first and the second terahertz detectors (103, 104), a part of the terahertz signals radiated by the terahertz radiator (102) are returned via the lens component 11 to the first terahertz detector (103), the other part thereof are returned, via the lens component (11) and a to-be-detected sample, to the second terahertz detector (104), reference electrical signals obtained by the first terahertz detector (103) and sample electrical signals obtained by the second terahertz detector (104) are input to the signal processing device (122) for the moisture content detection of the to-be-detected sample. The present invention can timely and accurately detect moisture content, with a higher signal-to-noise ratio and stability.

## Description

### TECHNICAL FIELD

The invention relates to the technical field of terahertz detection and especially to a system for detecting, controlling and monitoring moisture content.

### BACKGROUND

In industrial production, moisture content is a key factor to determine the product quality, may not only affect physicochemical properties of products, such as weight, density, viscosity, refractive index, water activity and electric conductivity, but also influences the product processing performances, commercialization requirements, legitimacy, etc. The moisture content detection system is capable of monitoring the production process and inspecting the product quality. With the increasingly rigorous development of quality inspection, moisture content level has become an important index to measure the product quality and has been widely applied to industries such as medicines, grains, cigarettes and tobacco, papermaking, plastic, textile, etc.

The moisture content detection system can be theoretically divided to physical detecting methods and chemical detecting methods. The commonly used physical detecting methods are the weight loss method, the distillation stratification method and the gas chromatography method; and the main chemical detecting methods are the Karl Fischer method, the toluene method and the like. The Karl Fischer method has been listed as an international standard method for the moisture detection of many substances and is used for developing detection instruments in addition to the volumetric and Coulomb method.

However, with the rapid development of industrialization, detection speed of a few minutes cannot meet the market demands any longer, and online real-time moisture content detection is becoming the main trend of the market. At present, a few indirect detecting methods can provide online moisture detection, such as a microwave resonance method and near infrared spectroscopy, which have relatively low signal-to-noise ratio and stability.

### BRIEF SUMMARY

The invention aims at providing a system for detecting, controlling, and monitoring moisture content, which can detect moisture content timely and accurately and has relatively high signal-to-noise ratio and high stability.

The objective of the invention is realized via a technical solution below:

A moisture content detection system comprises a moisture meter system component, a lens component and a signal analysis component; the moisture meter system component comprises a light source component, a terahertz radiator, and a first terahertz detector and a second terahertz detector; the signal analysis component comprises a bias signal generator and a signal processing device;
the light source component is configured to generate a laser beat frequency beam, which is splitted and sent to the terahertz radiator, and the first and the second terahertz detectors;
the terahertz radiator is configured to radiate terahertz signals under the action of the incident laser beat frequency beam and the electric field of the bias signal generator; a part of the radiated terahertz signals are returned to the first terahertz detector via transmission and/or reflection of the lens component while the other part of the radiated terahertz signals are returned to the second terahertz detector via transmission and/or reflection of the lens component and reflection of a to-be-detected sample;
the first terahertz detector is configured to obtain reference electrical signals under the action of the incident laser beat frequency beam and the returned terahertz signals; the second terahertz detector is configured to obtain sample electrical signals under the action of the incident laser beat frequency beam and the returned terahertz signals; and the reference electrical signals and the sample electrical signals are input to the signal processing device to detect the moisture content of the to-be-detected sample.

According to the solution of the moisture content detection system of the invention, the moisture content detection system comprises the moisture meter system component, the lens component and the signal analysis component. The moisture meter system component comprises the light source component, the terahertz radiator, and the first and the second terahertz detectors; the signal analysis component comprises the bias signal generator and the signal processing device. As the laser beat frequency beam generated by the light source component is split to the terahertz radiator and the first and the second terahertz detectors, the terahertz radiator is configured to radiate terahertz signals under the action of the incident laser beat frequency beam and the electric field of the bias signal generator; as a part of the radiated terahertz signals are returned to the first terahertz detector via transmission and/or reflection of the lens component while the other part of the radiated terahertz signals are returned to the second terahertz detector via transmission and/or reflection of the lens component and reflection of a to-be-detected sample, the first terahertz detector is configured to obtain the reference electrical signals under the action of the incident laser beat frequency beam and the returned terahertz signals, and the second terahertz detector is configured to obtain the sample electrical signals under the action of the incident laser beat frequency beam and the returned terahertz signals; and the reference electrical signals and the sample electrical signals are input to the signal processing device to detect the moisture content of the to-be-detected sample. Therefore, the moisture content in the to-be-detected sample can be obtained in real time. In addition, since the laser beat frequency split to the terahertz radiator and the first and the second terahertz detectors is from the same light source component, hardware costs can be saved; the frequencies of the laser split to the terahertz radiator and the first and second terahertz detectors are the same and the detection accuracy can be improved. Meanwhile, as the moisture detection is carried out based on the terahertz radiation signals, the signal-to-noise ratio and the stability are relatively high.

A moisture content control system comprises a microcomputer and the moisture content detection system as mentioned above; the microcomputer is connected to the signal processing device of the moisture content detection system, and the microcomputer is also connected to a production line control device;
the signal processing device is used for feeding the detected moisture content value of the to-be-detected sample back to the microcomputer;

The microcomputer is used for comparing the moisture content value with a preset moisture content threshold value to obtain a comparison result, judging whether the to-be-detected sample needs a further dewatering operation based on the comparison result, obtaining the judgment result, and generating an instruction based on the judgment result and sending the instruction to the production line control device; and
the production line control device is used for controlling the moving direction of a corresponding production line based on the instruction.

According to the solution of the moisture content control system of the invention, as the moisture content control system comprises the moisture content detection system, i also can detect the moisture content timely and accurately and also has a relatively high signal-to-noise ratio and relatively high stability. Meanwhile, as the moisture content control system is used for comparing the moisture content value with the preset moisture content threshold value, judging whether the to-be-detected sample needs further dewatering operation based on the comparison result, generating an instruction based on the judgment result, and sending the instruction to the production line control device to control the moving direction of the corresponding production line, the moisture content control system can realize automatic control of the production line based on the moisture content value detected by the moisture content detection system.

A moisture content monitoring system comprises a data storage server and the moisture content detection system as mentioned above; and the data storage server is connected to the signal processing device of the moisture content detection system;

The signal processing device is used for uploading the moisture content value monitored at each moment to the data storage server in real time.

According to the scheme of the moisture content monitoring system of the invention, as it comprises the moisture content detection system, the moisture content monitoring system also can detect the moisture content timely and accurately and also has relatively high signal-to-noise ratio and relatively high stability. Meanwhile, as the moisture content value monitored at each moment is also uploaded to the data storage server in real time, it is convenient for a manager of the production line to check the real-time moisture content change curve in the production process via various terminal programs and to understand the control behaviors of the production line device, thereby realizing the objective of monitoring the production line; and it is also convenient for the manager to perform data analysis on the data (moisture content value at each moment) stored in the data storage server, adjust the production manufacturing process, thereby improving the production benefits.

### BRIEF DESCRIPTION OF DRAWINGS

Fig. 1 is a composition structure schematic diagram of the moisture content detection system of the embodiment 1;
Fig. 2 is a detailed composition structure schematic diagram of the moisture meter system component in Fig. 1 in one embodiment;
Fig. 3 is a schematic diagram of the detailed composition structure of the lens component in Fig. 1 in one embodiment and a connection relationship between the lens component the lens component and a portion of the devices of the moisture meter system component;
Fig. 4 is the schematic diagram 1 of the working principle of the moisture content detection system of the embodiment 1;
Fig. 5 is the schematic diagram 2 of the working principle of the moisture content detection system of the embodiment 1 and the detailed composition structure of the signal analysis component;
Fig. 6 is a composition structure schematic diagram of the moisture content control system of the embodiment 2;
Fig. 7 is an application schematic diagram of the moisture content control system of the embodiment 2; and
Fig. 8 is a composition structure schematic diagram of the moisture content monitoring system of the embodiment 3.

### DETAILED DESCRIPTION

In order to make the objective, the technical solution and advantages of the invention more clear, the invention is further described in detail in combination with the accompanying drawings and embodiments below. It is understood that the specific embodiments described herein are used solely for the interpretation of the present invention and are not construed as a limit to the invention.

Terahertz radiation refers to electromagnetic radiation with the frequency from 0.1 THz to 10 THz, which has good penetrability for lots of dielectric materials and non-polar substances and particularly has strong absorption characteristic for water. As water is a polar molecule and has absorption for the terahertz far higher than other non-polar molecule components, moisture detection carried out by using terahertz radiation in the embodiment is better in signal-to-noise ratio and stability than a microwave detection method and a near infrared detection method. By using terahertz radiation for moisture detection, lossless, real-time and accurate moisture content monitoring can be implemented during the production line stages such as quality monitoring and finished product grading of the production process, and product quality and production and processing performance can be ensured. Each embodiment of the solution of the invention is described in detail below.

### Embodiment 1

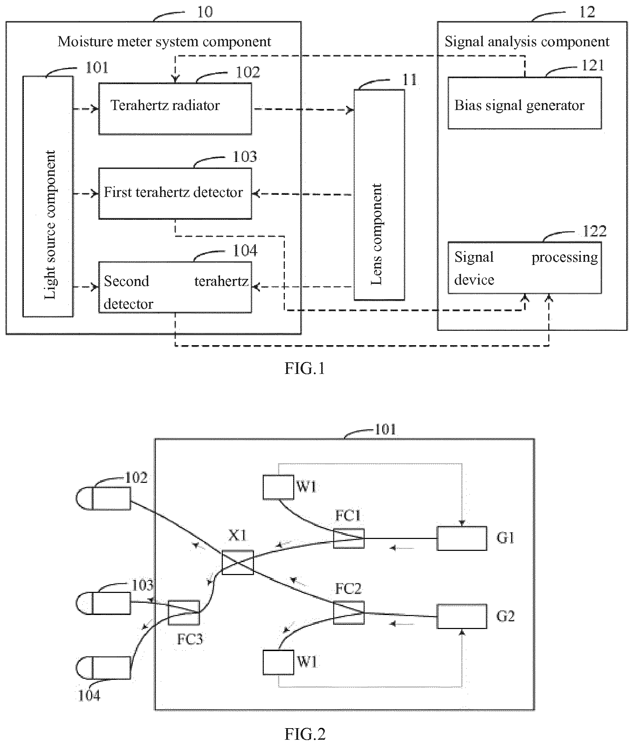

Fig. 1 is the composition structure schematic diagram of a moisture content detection system of the embodiment 1. As shown in Fig. 1, the moisture content detection system of the embodiment 1 comprises a moisture meter system component 10, a lens component 11 and a signal analysis component 12. The moisture meter system component 10 comprises a light source component 101, a terahertz radiator 102, a first terahertz detector 103 and a second terahertz detector 104; the terahertz radiator 102, the first terahertz detector 103 and the second terahertz detector 104 are connected to the light source component 101 respectively; and the signal analysis component 12 comprises a bias signal generator 121 and a signal processing device 122.

The lens component 11 is arranged among the terahertz radiator 102, the first terahertz detector 103 and the second terahertz detector 104 The terahertz radiator 102 is connected to the bias signal generator 121; and the first terahertz detector 103 and the second terahertz detector 104 are connected to the signal processing device 122 respectively.

Here, the lens component may include one or more of a parabolic mirror, a beam splitter mirror, a plane mirror and a lens; and the number of each type of the parabolic mirror, the beam splitter mirror, the plane mirror and the lens respectively may be one or more.

The light source component 101 is used for generating the laser beat frequency beam; and the generated laser beat frequency beam is split to the terahertz radiator 102, the first terahertz detector 103 and the second terahertz detector 104.

The terahertz radiator 102 radiates terahertz signals to the lens component 11 under the action of the incident laser beat frequency and the electric field provided by the bias signal generator 121. A part of the radiated terahertz signals are returned to the first terahertz detector 103 via transmission and/or reflection of the lens component 11; and the other part of the radiated terahertz signals are returned to the second terahertz detector 104 via transmission and/or reflection of the lens component 11 and reflection of the to-be-detected sample (not shown in Fig. 1).

The first terahertz detector 103 obtains reference electrical signals under the action of the incident laser beat frequency beam and the returned terahertz signals; the second terahertz detector 104 obtains sample electrical signals under the action of the incident laser beat frequency beam and the returned terahertz signals; and the reference electrical signals and the sample electrical signals are input to the signal processing device 122 for moisture content detection of the to-be-detected sample.

The moisture content in the to-be-detected sample can be obtained in real time by adopting the solution of the embodiment. In addition, as the laser beat frequency split to the terahertz radiator 102, the first terahertz radiator 103, and the second terahertz detector 104 is from the same light source component 101, hardware costs can be saved, the frequencies of the laser split to the terahertz radiator 102, the first terahertz detector 103, and the second terahertz detector 104 are the same and the detection accuracy can be improved. Meanwhile, as the moisture detection is carried out based on terahertz radiation signals, the signal-to-noise ratio and the stability are relatively high.

Fig. 2 is the detailed composition structure schematic diagram of the moisture meter system component 10 in one embodiment. The composition structure schematic diagram of one preferred embodiment of the moisture meter system component 10 in Fig. 2 may comprise all shown in Fig. 2 or may only include a portion shown in Fig. 2 when realizing the moisture content detection system specifically based on different considerations; and the specific embodiments of the moisture content detection system are described in detail below.

In one embodiment, the light source component 101 comprises a first laser source G1, a second laser source G2 and an optical frequency mixer XI in Fig. 2; the input end of the optical frequency mixer XI is connected to the output end of the first laser source G1 and the output end of the second laser source G2 respectively; and the output end of the optical frequency mixer XI is connected to the input end of the terahertz radiator 102, the input end of the first terahertz detector 103 and the input end of the second terahertz detector 104 respectively.

The first laser source G1 and the second laser source G2 are used for generating infrared laser beams with a frequency difference within a set range. Generally speaking, it is most appropriate that the frequency difference is relatively approximate and is not equal (for example, smaller than a relatively small set value); and both the first laser source G1 and the second laser source G2 may be a diode laser source.

In one embodiment, to make the frequencies (f₁ and f₂) of the incident laser controllable, the light source component 101 may further comprise a first coupler FC1, a second coupler FC2, a first frequency stabilizer W1 and a second frequency stabilizer W2 on the basis of one embodiment.

As shown in Fig. 2, the input end of the first coupler FC1 is connected to the output end of the first laser source G1, the output end of the first coupler FC1 is connected to the input end of the first frequency stabilizer W1 and the input end of the optical frequency mixer XI respectively, the input end of the second coupler FC2 is connected to the output end of the second laser source G2, and the output end of the second coupler FC2 is connected to the input end of the second frequency stabilizer W2 and the input end of the optical frequency mixer X2 respectively; and
the first frequency stabilizer W1 performs frequency stabilization on the first laser source G1 through a portion of output light of the first light source G1, and the second frequency stabilizer W2 performs frequency stabilization on the second laser source G2 through a portion of output light of the second laser source G2.

In the embodiment, the first frequency stabilizer W1 and the second frequency stabilizer W2 are added to make the frequencies (f1 and f2) of the incident laser controllable and make the radiation of the terahertz frequency band be obtained easily.

The splitting ratio of each output end of the first coupler FC1 and the second coupler FC2 can be set based on actual needs; and generally speaking, most incident power (e.g. 99%) of laser beams is branched to the optical frequency mixer XI, and only a tiny minority of incident power (about 1%) of the laser beam is branched to the first frequency stabilizer W1 and the second frequency stabilizer W2. The external frequency of the laser beat frequency can be controlled through the first frequency stabilizer W1 and the second frequency stabilizer W2.

In specific implementation, the optical frequency mixer XI can be connected to the first terahertz detector 103 and the second terahertz detector 104 via a third coupler FC3 in Fig. 2. Specifically, as shown in Fig. 2, the light source component further comprises a third coupler FC3; the input end of the third coupler FC3 is connected to the output end of the optical frequency mixer X1, and the output end of the third coupler FC3 is connected to the input end of the first terahertz detector 103 and the input end of the second terahertz detector 104 respectively.

The splitting ratio of the third coupler FC3 can be set based on actual needs; and the splitting ratios of the two output ends of the third coupler FC3 are preferably 50%.

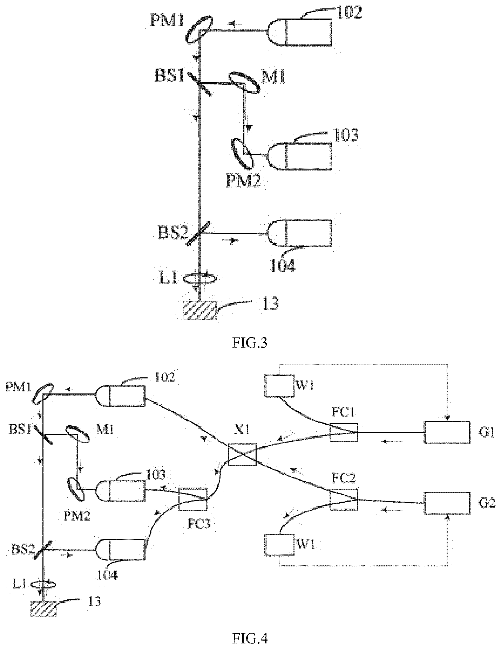

In one embodiment, as shown in Fig. 3, the lens component 11 comprises a first paraboloidal mirror PM1, a second paraboloidal mirror PM2, a first beam splitter BS1, a second beam splitter BS2, a plane mirror M1 and a lens L1; terahertz signals radiated by the terahertz radiator 102, after being reflected to the first beam splitter BS1 by the first paraboloidal mirror PM1, is split into two parts by the first beam splitter BS1, wherein one part is reflected by the plane mirror M1 and then is focused by the second paraboloidal mirror PM2 to the first terahertz detector 103, and the other part is focused by the lens L1, reflected by the to-be-detected sample 13, focused by the lens L1 and reflected by the second beam splitter BS2 to the second terahertz detector 104.

By adoption of the solution in the embodiment, the signal intensity is increased and the detection accuracy is improved as beams entering the first terahertz detector 103 and the second terahertz detector 104 are subjected to a focusing process. What needs to be explained is that the structural composition of the lens component 11 is not limited to this.

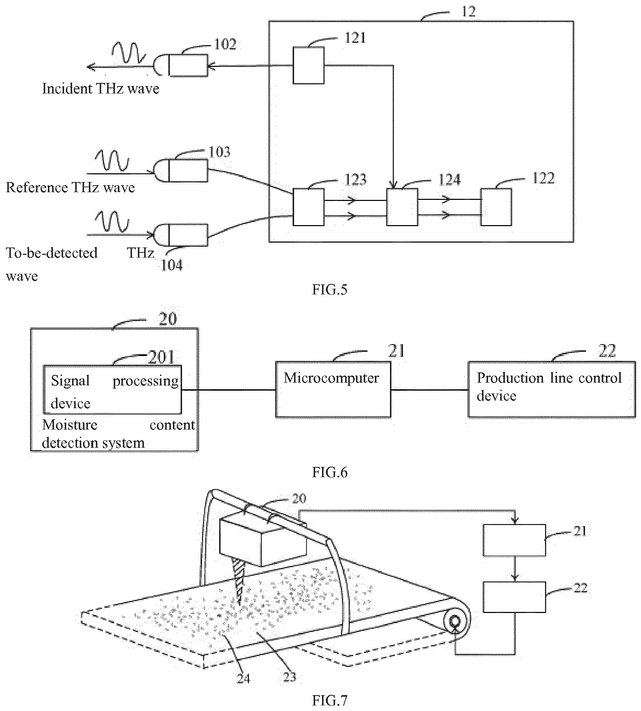

To facilitate the understanding of the invention, the working principle of the invention is illustrated in combination with Fig. 4 and Fig. 5.

In Fig. 4, the first laser source G1 and the second laser source G2, used for generating infrared laser beams with approximate frequency, are in fiber connection with the first coupler FC1 and the second coupler FC2, respectively; and the infrared laser beams are split; most of the incident power of the laser beams is split to the optical frequency mixer XI to form the laser beat frequency and a tiny minority of incident power (about 1%) of the laser beams is split to the first frequency stabilizer W1 and the second frequency stabilizer W2; the first frequency stabilizer W1 and the second frequency stabilizer W2 are used to adjust the frequencies (f1 and f2) of the incident laser, thereby adjusting the external frequency of the laser beat frequency.

The optical frequency mixer XI is used for mixing or superimposing two paths of laser beams generated by the first laser source G1 and the second laser source G2, making two paths of the laser components (for example, the frequencies are respectively f1 and f2) with slightly frequency difference to mutually have a differential oscillation effect, thereby generating the laser beat frequency. the external frequency of the laser beat frequency is the difference of the incident laser frequencies (that is f₁-f₂); and the external frequency directly determines the frequency of the subsequently generated terahertz radiation.

Electron-hole pairs are generated as one path of the laser beat frequency irradiates a photoconductor (for example GaAs) in the terahertz radiator 102; a modulated photocurrent is formed as directional migration of the carriers occurs under the action of the electric field of the bias signal generator 121; as the photocurrent modulated by the beat frequency is output by an antenna structure, terahertz radiation signals, that is, the aforementioned terahertz signals, are generated and are transmitted to the dimming lens component 11 arranged in free space. It should be noted that, a nonlinear crystal can be used to replace the optical frequency mixer XI and the terahertz radiator 102to extract the laser beat frequency and generate terahertz radiation.

The other path of the laser beat frequency is split to the first terahertz detector 103 and the second terahertz detector 104 respectively through the third coupler FC3. After entering the first terahertz detector 103 and the second terahertz detector 104, the laser beat frequency irradiates the photoconductors of both the first terahertz detector 103 and the second terahertz detector 104 to form the electron-hole pairs. The returned photoconductor radiation forms an electric field externally applied to the photoconductors to prompt directional movement of carriers. thereby forming a photocurrent. The photocurrent can be subjected to signal collection and processing in the following signal analysis component 12.

Here, the first terahertz detector 103 and the second terahertz detector 104 are completely the same in structure and detection principle, but different in use. The first terahertz detector 103 is used for receiving terahertz signals emitted directly from the terahertz radiator 102 to obtain a reference electric signal; and the second terahertz detector 104 is used for receiving the terahertz radiation reflected by the to-be-detected sample, converting the terahertz radiation into an electrical signal, comparing the electrical signals with the reference electrical signal and hence analyzing the moisture content in the to-be-detected sample in real time.

The first paraboloidal mirror PM1 collects the terahertz signals radiated by the terahertz radiator 102 to obtain a parallel light. The parallel light is split by the first beam splitter BS1; one path, after being reflected by the plane mirror M1 and focused by the second paraboloidal mirror PM2, reaches the first terahertz detector 103 so as to form a reference photocurrent; the other path, after being focused by the lens L1, reflected by the to-be-detected sample 13, gathered by the lens L1, and reflected by the second beam splitter BS2, reaches the second terahertz detector 104 so as to form a sample photocurrent. The two photocurrents are amplified and collected by the rear-end signal analysis component 12 to obtain two electrical signals, which are compared to analyze the moisture content in the sample.

In one embodiment, as shown in Fig. 5, the signal analysis component 12 may further comprise a current voltage amplifier 123 and a phase-locked amplifier 124. The current voltage amplifier 123 is connected to the first terahertz detector 103 and the second terahertz detector 104 respectively. The current voltage amplifier 123 is also connected to the phase-locked amplifier 124, and the phase-locked amplifier 124 is connected to the bias signal generator 121 an the signal processing device 122 respectively.

The current voltage amplifier 123 is used for converting weak photocurrent (the sample photocurrent and the reference photocurrent abovementioned) into electrical signals (the reference electrical signal and the sample electrical signal) and performing low-noise amplification of a certain intensity on the electrical signals; the phase-locked amplifier 124 suppresses useless noise, improves the detection signal-to-noise ratio, and amplifies the signals to some extent. The bias signal generator 121 provides reference signals to the phase-locked amplifier 124. The signal processing device 122 can collect and pre-process the reference electrical signals and the sample electrical signals, obtain a reference spectrum and a sample spectrum, and obtain the moisture content of the detected sample according to the intensity variation of the water absorption peak in spectrum data.

During the specific implementation, devices in the moisture meter system component 10 are generally connected through optical fibers and the devices in the signal analysis component 12 are generally electrically connected. The moisture content detection system can be applied to the belt production line in the industrial production and has a relatively high application value.

### Embodiment 2

According to the moisture content detection system of the embodiment 1, the invention also provides a moisture content control system. As shown in Fig. 6, the moisture content monitoring system of the embodiment 2 comprises a microcomputer 21 and the moisture content detection system 20 according to any of the above embodiments, the microcomputer 21 is connected to the signal processing device 201 of the moisture content detection system 20, and the microcomputer 21 is also connected to a production line control device 22.

The signal processing device 201 is used for feeding the moisture content value of the to-be-detected sample back to the microcomputer.

The microcomputer 21 is used for comparing the moisture content value with a preset moisture content threshold value to obtain a comparison result, judging whether the to-be-detected sample needs further dewatering operation based on the comparison result, obtaining the judgment result, generating an instruction based on the judgment result, and sending the instruction to the production line control device.

The production line control device 22 is used for controlling the moving direction of a corresponding production line based on the instruction.

In combination with the accompanying drawing 7, illustration is made by taking the application of the moisture content control system to the belt production line in the industrial production as an example. The belt production line, usually used for industrial production of industrial and agricultural products, comprises a production line control device 22 (for example, a conveyor belt control system), a conveyor belt 23 and a to-be-detected semi-finished product 25 with unknown moisture content (equivalent to the aforementioned to-be-detected sample) on the conveyor belt 23. The moisture content detection system 20 detects the moisture content of the to-be-detected semi-finished product 25 and feeds the obtained moisture content value of the semi-finished product 25 to the microcomputer 21. The microcomputer 21 compares the received moisture content value with the preset moisture content threshold value to obtain a comparison result, judges whether the to-be-detected semi-finished product 25 needs further dewatering operation based on the comparison result so as to obtain a judgment result, generates an instruction based on the judgment result, and sends the instruction to the production line control device 22 to control the moving direction of the conveyor belt.

Here, the moisture content threshold value can be set according to the moisture content meeting the product requirements.

The moisture content detection system 20 can be fixed at a scanning shaft to determine the moisture content of the to-be-detected semi-finished product 25 along one line or within one area, thereby better evaluating whether the average moisture content of the product meets the required product moisture content.

### Embodiment 3

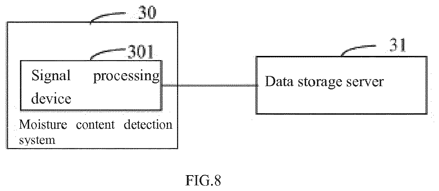

According to the moisture content detection system of the embodiment 1, the invention also provides a moisture content monitoring system. As shown in Fig. 8, the moisture content monitoring system of the embodiment 3 comprises a data storage server 31 and the moisture content detection system according to any of the above embodiments. The data storage server 31 is connected to a signal processing device 301 of the moisture content detection system 30. Here, the data storage server 31 may be a cloud storage. The signal processing device 301 uploads the moisture content value monitored at each moment to the data storage server 31; and the storage server 31 can generate a real-time moisture change curve based on each received moisture content value.

By adoption of the solution of the embodiment, a manager of the production line can know the control behavior of the production line devices by checking the real-time moisture content change curve in the production process by using various terminal programs such as computer software and mobile phone applications, thereby realizing the purpose of monitoring the production line. The data storage server 31 also can store data offline and perform data analysis, thereby bringing convenience to the manager of the production line to adjust the production and manufacturing process based on the data analysis result and realizing maximization of the production benefit.

It should be noted that when one element is "connected" to another element, the element may be directly connected to another element or indirectly connected to another element according to needs. The terms "first", "second", and "third" are only used for the description purpose, and cannot be understood to indicate or imply the relative importance.

The technical features of the embodiments can be combined arbitrarily. For a simple description, not all possible combinations of the technical features in the embodiment are described. However, all the combinations of the technical features shall be considered to be within the scope of the specification as long as there is no contradiction.

The aforementioned embodiments only represent several execution modes of the invention. The embodiments are described specifically and in detail, but cannot be construed as a limit to the scope of the invention. It should be pointed out that, some deformations and modifications which may be made by without departing from the conception of the invention shall belong to the scope of the invention. As a result, the protection scope of the invention shall be determined according to the appended claims.

## Claims

1. A moisture content detection system, comprising a moisture meter system component, a lens component and a signal analysis component, wherein the moisture meter system component comprises a light source component, a terahertz radiator, and a first terahertz detector and a second terahertz detector; the signal analysis component comprises a bias voltage generator and a signal processing device;
the light source component is configured to generate a laser beat frequency beam, wherein the generated laser beat frequency beam is spitted and sent to the terahertz radiator, the first and the second terahertz detectors;
the terahertz radiator is configured to radiate terahertz signals under the action of the incident laser beat frequency beam and the electric field of the bias signal generator; a part of the radiated terahertz signals are returned to the first terahertz detector via transmission and/or reflection of the lens component, while the other part of the radiated terahertz signals are returned to the second terahertz detector via transmission and/or reflection of the lens component and reflection of a to-be-detected sample;
the first terahertz detector is configured to obtain reference electrical signals under the action of the incident laser beat frequency beam and the returned terahertz signals; the second terahertz detector is configured to obtain sample electrical signals under the action of the incident laser beat frequency beam and the returned terahertz signals; and the reference electrical signals and the sample electrical signals are input to the signal processing device for moisture content detection of the to-be-detected sample.

2. The moisture content detection system according to claim 1, **characterized in that**, the light source component comprises a first laser, a second laser, and an optical frequency mixer, the input end of the optical frequency mixer is connected to the first laser source and the second laser source respectively, and the output end of the optical frequency mixer is connected to the input end of the terahertz radiator, the input end of the first terahertz detector, and the input end of the second terahertz detector respectively.

3. The moisture content detection system according to claim 2, **characterized in that**, the light source component further comprises a first coupler, a second coupler, a first frequency stabilizer and a second frequency stabilizer;
the input end of the first coupler is connected to the output end of the first laser source, the output end of the first coupler is connected to the input end of the first frequency stabilizer and the input end of the optical frequency mixer respectively, the input end of the second coupler is connected to the output end of the second laser source, and the output end of the second coupler is connected to the input end of the second frequency stabilizer and the input end of the optical frequency mixer respectively;
the first frequency stabilizer is configured to perform frequency stabilization on the first laser source through a portion of output light of the first light source, and the second frequency stabilizer is configured to perform frequency stabilization on the second laser source through a portion of output light of the second laser source.

4. The moisture content detection system according to claim 2 or 3, **characterized in that**, the optical frequency mixer and the terahertz radiator is replaced with a nonlinear crystal.

5. The moisture content detection system according to claim 2 or 3, **characterized in that**, the light source component further comprises a third coupler, the input end of the third coupler is connected to the output end of the optical frequency mixer, and the output end of the third coupler is connected to the input end of the first terahertz detector and the input end of the second terahertz detector respectively.

6. The moisture content detection system according to claim 2 or 3, **characterized in that**, the frequency difference of the infrared laser beams generated by the first laser source and the second laser source is within a set range.

7. The moisture content detection system according to claim 1, **characterized in that**, the lens component comprises a first paraboloidal mirror, a second paraboloidal mirror, a first beam splitter, a second beam splitter, a plane mirror and a lens; the terahertz signal radiated by the terahertz radiator after being reflected to the first beam splitter by the first paraboloidal mirror is split into two parts by the first beam splitter, one part is transmitted to the first terahertz detector after being reflected by the plane mirror and focused by the second paraboloidal mirror, while the other part is transmitted to the second terahertz detector after being focused by the lens, reflected by the to-be-detected sample, focused by the lens, and reflected by the second beam splitter.

8. The moisture content detection system according to claim 1, **characterized in that**, the signal analysis component further comprises a current voltage amplifier and a phase-locked amplifier, the current voltage amplifier is connected to the first terahertz detector and the second terahertz detector respectively, the current voltage amplifier is also connected to the phase-locked amplifier, and the phase-locked amplifier is connected to the bias signal generator and the signal processing device respectively.

9. A moisture content control system, comprising a microcomputer and the moisture content detection system of any one of claims 1 to 8; the microcomputer is connected to the signal processing device of the moisture content detection system and the microcomputer is also connected to a production line control device;
the signal processing device is configured to feed the detected moisture content value of the to-be-detected sample back to the microcomputer;
the microcomputer is configure to compare the moisture content value with a preset moisture content threshold value to obtain a comparison result, judge whether the to-be-detected sample needs further dewatering operation based on the comparison result, obtain the judgment result, generate an instruction based on the judgment result, and send the instruction to the production line control device;
the production line control device is configured to control the moving direction of a corresponding production line based on the instruction.

10. A moisture content monitoring system, comprising a data storage server and the moisture content detection system according to any one of claims 1 to 8, wherein the data storage server is connected to the signal processing device of the moisture content detection system; and
the signal processing device is configured to upload the moisture content value monitored at each moment to the data storage server in real time.
